# EUROPÄISCHE PATENTSCHRIFT

(11) **EP 4 337 444 B1**
(45) Veröffentlichungstag und Bekanntmachung des Hinweises auf die Patenterteilung: **04.06.2025**
(21) Anmeldenummer: 22726761.4
(22) Anmeldetag: 04.05.2022
(51) Int. Cl.: B29C 48/08, B29C 48/10, B29C 48/92

(54) **VERFAHREN ZUR HERSTELLUNG VON FOLIE AUS EINER GESAMTMENGE AN ROHSTOFFEN MIT EINER FOLIENEXTRUSIONSMASCHINE SOWIE COMPUTERPROGRAMMPRODUKT ZUR DURCHFÜHRUNG DES VERFAHRENS**
METHOD FOR PRODUCING FILM FROM A TOTAL AMOUNT OF RAW MATERIALS USING A FILM EXTRUSION MACHINE, AND COMPUTER PROGRAM PRODUCT FOR CARRYING OUT THE METHOD
PROCÉDÉ DE FABRICATION D'UNE FEUILLE À PARTIR D'UNE QUANTITÉ GLOBALE DE MATIÈRES PREMIÈRES AU MOYEN D'UNE MACHINE D'EXTRUSION DE FEUILLES ET PRODUIT-PROGRAMME INFORMATIQUE POUR LA MISE EN OEUVRE DU PROCÉDÉ

(30) Priorität: 14.05.2021 DE 102021112619
(43) Veröffentlichungstag der Anmeldung: 20.03.2024
(73) Patentinhaber: Windmöller & Hölscher KG, 49525 Lengerich (DE)
(72) Erfinder: BACKMANN, Martin, 49525 Lengerich (DE); BUSSMANN, Markus, 49525 Lengerich (DE); HOFFMANN, Wolfgang, 49525 Lengerich (DE); SCHUH, Melanie, 49525 Lengerich (DE); SCHMITZ, Torsten, 49525 Lengerich (DE)
(86) Internationale Anmeldenummer: PCT/EP2022/062004
(87) Internationale Veröffentlichungsnummer: WO 2022/238205

(56) Entgegenhaltungen:
- WO-A2-2018/072773
- DE-A1- 102016 112 121
- DE-A1- 102017 108 923
- DE-A1- 102019 127 545

## Beschreibung

Die Erfindung betrifft Verfahren zur Herstellung von Folie aus einer Gesamtmenge an Rohstoffen mit einer Folienextrusionsmaschine sowie ein entsprechendes Computerprogrammprodukt.

Aus der DE 10 2016 112 121 A1 ist ein Verfahren zur Herstellung einer Kunststofffolie mittels einer Folienextrusionsmaschine bekannt. Bei diesem Verfahren ist vorgesehen, dass zumindest ein Produktionsparameter der Folienextrusionsmaschine auf Basis eines Folienproduktionsmodells mittels einer Steuerungsvorrichtung berechnet und mittels der Steuerungsvorrichtung halbautomatisch zur Anpassung der Produktion vorgeschlagen wird.

Es ist bekannt, dass zur Herstellung von Folie mit gewünschten Eigenschaften Folienextrusionsanlagen hinsichtlich ihrer Produktionsparameter eingestellt werden. Eine Vielzahl von Produktionsparametern ist dabei zu berücksichtigen. So sind an vielen Stellen Temperaturen, Drücke oder andere physikalische Größen, die direkt auf die Rohstoffe, die Zwischenprodukte und/oder die fertige Folie einwirken, einzustellen. Dies gilt insbesondere für die Einstellung, also die Steuerung und/oder die Regelung der Folienextrusionsanlage.

Die hergestellte Folie kann dann, insbesondere im Labor, aber auch noch während der Herstellung, hinsichtlich ihrer Eigenschaften charakterisiert werden. Es wird insbesondere die tatsächliche Erfüllung einer Funktion der Folie, aber auch messbare Folienparameter wie Reißfestigkeit oder Stretchfähigkeit der Folie, untersucht.

Bekannte Lösungen basieren bei der Steuerung und/oder Regelung der Folienextrusionsanlage zu einem großen Teil auf der Erfahrung und dem Wissen des Bedienpersonals.

Gleiches gilt bei der Auswahl der Rohstoffe. Auch hier erfolgt die Auswahl der Rohstoffe aufgrund von Erfahrungen, Versuchen und der Angaben der Hersteller zu den Rohstoffen.

Insgesamt kann die Herstellung einer Folie mit gewünschten Eigenschaften langwieriger Vorarbeiten, die zudem teuer sein können, bedürfen.

Es ist Aufgabe der vorliegenden Erfindung, die voranstehend beschriebenen Nachteile zumindest teilweise zu beheben. Insbesondere ist es Aufgabe der vorliegenden Erfindung, kostengünstiger und auf einfachere Weise eine Folie mit gewünschten Eigenschaften herzustellen.

Die voranstehende Aufgabe wird gelöst durch ein Verfahren mit den Merkmalen des Anspruchs 1 sowie ein Computerprogrammprodukt mit den Merkmalen des Anspruchs 6. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und jeweils umgekehrt, sodass bezüglich der Offenbarung zu den einzelnen Erfindungsaspekten stets wechselseitig Bezug genommen wird bzw. werden kann.

Das erfindungsgemäße Verfahren bezieht sich dabei auf die Herstellung von Kunststofffolie aus einer Gesamtmenge an Rohstoffen mit einer Folienextrusionsmaschine. Das Verfahren umfasst dabei die folgenden Schritte:
- Erfassen von Folienparametern zu gewünschten Eigenschaften der Kunststofffolie
- Erfassen von Rohstoffparametern zu Eigenschaften der Rohstoffe
- Gruppieren der Rohstoffparameter zu zumindest zwei Rohstoffparametergruppen
- Bilden von Korrelationen zwischen Rohstoffparametergruppen
- Bilden von Korrelationen zwischen den Folienparametern und den Rohstoffparametergruppen auf Basis eines Folienproduktionsmodells
- Erfassen einer Auswahl zumindest eines Rohstoffs aus zumindest einer Rohstoffparametergruppe
- Berechnen zumindest eines Produktionsparameters der Folienextrusionsmaschine auf Basis des Folienproduktionsmodelles
- Ausgabe des Produktionsparameters der Folienextrusionsmaschine.

Der Kerngedanke der Erfindung ist es demnach, für die Herstellung einer gewünschten Folie nicht einfach eine Auswahl aus der vorhandenen Gesamtmenge an unterschiedlichen Rohstoffen zu treffen, sondern die Rohstoffe zunächst hinsichtlich ihrer Parameter, also ihrer Eigenschaften, in Gruppen einzuteilen, also zu gruppieren. Dabei kann die Gruppierung mehrdimensional sein und kann so viele Gruppen umfassen, wie es vom Nutzer der Folienextrusionsmaschine gewünscht ist. So kann sich eine Gruppierung eines Rohstoffs auf den Temperaturbereich beziehen, bei dem dieser Rohstoff in der Folienextrusionsmaschine zu verarbeiten ist. Generell kann es eine Reihe von Gruppen geben, die sich auf die Verarbeitungseigenschaften des Rohstoffs beziehen.

Ein anderer Aspekt einer Gruppierung kann sich auf die resultierenden Eigenschaften des Rohstoffs in der Folie beziehen. So können Rohstoffe in einer Gruppe zusammengefasst werden, welche einen Durchlässigkeitsbereich für ein bestimmtes Gas darstellt. Auch kann die Güte der Haftung der Moleküle eines Rohstoffs an Molekülen eines anderen Rohstoffs in Gruppen eingeteilt werden. Ferner können auch wirtschaftliche Aspekte eine Rolle spielen und für Gruppierungen der Rohstoffe verwendet werden. So kann jeder Rohstoff hinsichtlich seines Preises in eine Gruppe eingeteilt werden, wobei eine Gruppe eine Preisspanne darstellt. Weitere Gruppierungen können sich auf die Zeitspanne, in der der Rohstoff verfügbar ist, beziehen. Darüber hinaus kann auch die Zulassung bestimmter Rohstoffe für bestimmte Anwendungen eine Basis für Gruppierungen sein. So ist beispielsweise nicht jeder Rohstoff für eine Lebensmittelverpackung zugelassen. Zudem lassen sich auch Gruppierungen der Rohstoffe hinsichtlich ihrer Umweltverträglichkeit durchführen. Viele andere Gruppierungsmöglichkeiten sind denkbar.

Das Erfassen von Eigenschaften liegt dem Gruppieren der Rohstoffe zugrunde. Dabei können die Eigenschaften grundsätzliche Eigenschaften der Rohstoffe wie etwa die chemische Zusammensetzung sein, aber auch beispielswiese ihre Herstellparameter, wie etwa Betriebsparameter der Herstellanlage. Ein weiterer Parameter kann ein Herstelldatum sein. Solche Rohstoffparameter können dem Nutzer der Folienextrusionsanlage, also dem Hersteller der Kunststofffolie, zumindest teilweise vom Rohstoffhersteller zur Verfügung gestellt werden. Auch die Ergebnisse von Untersuchungen, etwa durch eine chemische Analyse können hinzugezogen werden. Es bietet sich an, die Rohstoffparameter in einer Datenbank zu speichern. Diese kann beispielsweise in einem Internet-Datenspeicher auf einem externen Server abgelegt sein, welcher von einem Datenprovider betrieben wird.

Vorteilhaft ist es, wenn ein Rohstoffhersteller lediglich ausgewählte Eigenschaften der Rohstoffe (Informationen) für die oder innerhalb der Datenbank für einen Nutzer freigibt. Damit ist es beispielsweise möglich, dass der Rohstoffhersteller je nach Menge und Wichtigkeit der Informationen dem Nutzer diese gegen ein Entgelt zur Verfügung stellt.

Weiterhin ist erfindungsgemäß ein Schritt vorgesehen, in dem eine Korrelation gebildet wird zwischen den Folienparametern und den Rohstoffparametergruppen. Diese Zuordnung erfolgt auf Basis eines Folienproduktionsmodells, in dem der Einfluss von Rohstoffen aus Rohstoffparametergruppen auf die Eigenschaften der Folie abgebildet wird. Somit es möglich, dass für die gewünschten Eigenschaften eine Auswahl an Rohstoffen ausgegeben wird, vorzugsweise ein oder mehrere Rohstoffe für jede Eigenschaft der Folie.

Um jedoch beispielsweise zu vermeiden, dass inkompatible Rohstoffe zur Auswahl stehen, ist erfindungsgemäß vorgesehen, dass auch zwischen einzelnen Rohstoffparametergruppen Korrelationen gebildet werden.

Nach der Ermittlung möglicher Rohstoffkombinationen, die für die Herstellung der Folie in Betracht zu ziehen sind, ist vorgesehen, eine Auswahl aus den Rohstoffen zu treffen, welche in einem erfindungsgemäßen Schritt erfasst wird. Vorteilhaft ist dabei, wenn die erfasste Auswahl verifiziert wird. Dabei wird insbesondere festgestellt, ob die Auswahl zu der gewünschten Folie führt. Das "Erfassen zumindest eines Rohstoffs aus zumindest einer Rohstoffparametergruppe" kann auch bedeuten, dass aus den Rohstoffparametergruppen eine Auswahl an Rohstoffen direkt berechnet wird.

Damit auch innerhalb der Folienextrusionsmaschine die gewünschte Folie extrudiert wird, ist schließlich vorgesehen, auf Basis des Folienproduktionsmodells aus erfassten Angaben zumindest ein Folienproduktionsparameter für die Folienextrusionsmaschine berechnet und auszugeben. Damit ist es möglich, die Einstellung der Parameter der Folienextrusionsmaschine nicht nur dem Maschinenbediener zu überlassen, so dass die gewünschte Folie, insbesondere eine Folie mit gewünschter Qualität, hergestellt wird.

Mit Folienextrusionsmaschinen können alle Extrusionsmaschinen, aber auch nachgelagerte Komponenten gemeint sein, mit welchen sich die Rohstoffe in eine Folie umwandeln lassen, aber auch nachgelagerte Maschinenbestandteile, wie etwa Streckeinrichtungen, bis hin zu Wickeleinrichtungen, in der die Folie erstmalig zum Zwecke des Transports aufgewickelt wird. Eine Extrusionsmaschine kann nach dem Prinzip einer Blasfolienanlage oder einer Flachfolienanlage arbeiten.

Mit "Erfassen" können im Sinne der vorliegenden Erfindung verschiedene Arten der Datenerhebung gemeint sein. Diese können beispielsweise in Form von Daten bereits vorliegen, insbesondere in digitaler Form. Hierzu sind verschiedene Datenbanken vorstellbar. Eine Datenerhebung kann auch durch direkte Eingabe durch den Nutzer erfolgen oder durch Messung mittels Messinstrumente. Insbesondere können im Produktionsprozess vorgelagerte Maschinen, etwa eine Rohstoffherstellmaschine, Daten, insbesondere Messdaten an eine Maschine in einem nachgelagerten Produktionsprozesse, über Datenverbindungen weitergeben.

Ebenso ist der Begriff "Ausgabe" zu verstehen. So können die Produktionsparameter auf einem Bildschirm angezeigt oder auf andere Weise dem Maschinenbediener der Folienextrusionsmaschine zugänglich gemacht werden. Ebenfalls ist denkbar, dass die Recheneinrichtung, welche die genannten Berechnungen durchführt, diese über Datenverbindungen direkt an die Folienextrusionsmaschine, insbesondere an deren Steuereinrichtung weitergibt.

In einer vorteilhaften Weiterbildung der Erfindung ist ein Erfassen eines Detaillierungsgrads für die Rohstoffparametergruppen vorgesehen. Damit kann beispielsweise festgelegt werden, wie klein oder groß die Parameterbereiche der Rohstoffparameter sind. So kann es vorkommen, dass bei zu eng gewähltem Parameterbereich kein Rohstoff, der einer der Anforderungen genügt, zur Verfügung steht. In diesem Fall lässt sich der Parameterbereich anpassen, so dass eine erweiterte Rohstoffauswahl ermöglicht wird.

In einer weiteren vorteilhaften Ausführungsform der Erfindung ist eine Ausgabe von Auswahlvorschlägen für eine Auswahl von Rohstoffen vorgesehen. Mit anderen Worten werden für zumindest eine Rohstoffparametergruppe zumindest zwei Rohstoffe ausgegeben, aus denen ein Rohstoff auszuwählen ist. Insbesondere kann in dieser Ausführungsform für jeden der Rohstoffe des Auswahlvorschlags eine Bewertung ausgegeben werden. Auf Basis dieser Bewertung können die Einflüsse der Rohstoffe auf die Kunststofffolie abgeschätzt werden. Zum Beispiel kann eine Kunststofffolie produziert werden, die die Qualitätserfordernisse im Vergleich zur gewünschten Folie nicht voll erfüllt, jedoch deutlich preisgünstiger ist.

Vorteilhaft ist es weiterhin, wenn Rohstoffparametergruppen gewichtet werden. In diesem Fall kann den einzelnen Rohstoffparametergruppen eine Wichtigkeit zugeordnet werden, die bei der Korrelation zwischen den einzelnen Rohstoffparametergruppen berücksichtigt wird. Mit anderen Worten kann das Folienproduktionsmodell mit diesen Gewichtungen angepasst werden.

Die Erfindung lässt sich nochmals verbessern, wenn Produktionsparameterbereiche zumindest einer Folienproduktionsmaschine erfasst werden. Diese Produktionsparameterbereiche können dazu dienen, die Zahl der möglichen Rohstoffe zu erweitern und eine optimale Auswahl hieraus zu treffen. Umgekehrt kann die Auswahl an Rohstoffen beispielsweise an optimale Betriebsparameterpunkte der Folienproduktionsmaschine angepasst werden.

Unter "Erfassen" werden verschiedene Arten des Erfassens verstanden. So können beispielsweise unveränderliche Parameter zur Folienproduktionsmaschine einmalig in einer Datenbank erfasst sein. Dies ist beispielsweise der Fall, wenn es sich um geometrische Eigenschaften der Folienextrusionsmaschine handelt. Andere Parameter können in zeitlichen Abständen veränderbar sein, wie etwa Angaben der zur Verfügung stehenden Rohstoffe. Wieder andere Parameter können auftragsbezogen erfasst werden, wie etwa die gewünschten Eigenschaften der Folie. Dementsprechend kann die Erfassung auch auf Basis unterschiedlicher Merkmale erfolgen. So können die Parameter über Datenbanken, die beispielsweise im Speicher der Folienextrusionsmaschinen oder dezentral in Internetportalen gespeichert sind, zur Verfügung gestellt werden. Das Erfassen würde man in diesem Fall als "Auslesen von Daten" bezeichnen. Beispielsweise auftragsbezogene Parameter können über Eingabegeräte, wie etwa eine Tastatur, erfasst werden.

Im Rahmen des erfindungsgemäßen Verfahrens kann es vorteilhaft sein, zu zumindest einer Folienextrusionsmaschine Maschinenparameter und/oder Einstellungen zu erfassen. Das Erfassen von Maschinenparametern kann insbesondere bei der Inbetriebnahme erfolgen, bei der in einer Datenbank beispielsweise geometrische Daten der Folienextrusionsmaschine gespeichert werden. Zu diesen geometrischen Daten zählen insbesondere die maximale Anzahl der Schichten der Folie, die maximale Anzahl der einzelnen Rohstoffe, die für eine einzelne Schicht verwendet werden können, die Auslegung von Extruderschnecken zum Aufschmelzen der Rohstoffe, die Breite bzw. der Umfang der Düsenlippe, die Dicke der Düsenlippe. Diese Aufzählung ist nicht abschließend und daher auch nicht in Bezug auf die Erfindung beschränkend.

Es kann weitere Vorteile mit sich bringen, wenn eine Empfehlung abgegeben wird, welche Folienextrusionsmaschine zur Herstellung der gewünschten Folie ausgewählt werden sollte, wenn mehrere Folienextrusionsmaschinen, insbesondere unterschiedliche Folienextrusionsmaschinen zur Herstellung der Folie grundsätzlich zur Verfügung stehen. Oft stehen in einem Herstellungsbetrieb mehrere Folienextrusionsanlagen zur Verfügung, die sich in ihren Auslegungen hinsichtlich der geometrischen Daten, aber auch hinsichtlich ihrer physikalischen Parameter voneinander unterscheiden. In einer solchen Situation ist es möglich, eine dieser Anlagen auf Basis des Folienproduktionsmodells auszuwählen. Beispielsweise kann es bei einer gewünschten Folie, die einen fünfschichtigen Aufbau hat, vorteilhaft sein, wenn das Produkt auf einer Folienextrusionsanlage für Folien mit einem maximal siebenschichtigen Aufbau hergestellt wird.

Ebenfalls Gegenstand der vorliegenden Erfindung ist ein Computerprogrammprodukt, umfassend Befehle, die bei einer Ausführung des Programms auf einem Computer diesen dazu veranlassen, die Schritte eines erfindungsgemäßen Verfahrens durchzuführen. Damit bringt ein erfindungsgemäßes Computerprogrammprodukt die gleichen Vorteile mit sich, wie sie ausführlich mit Bezug auf ein erfindungsgemäßes Verfahren erläutert worden sind.
- Fig. 1: Schematische Darstellung einer Folienextrusionsmaschine,
- Fig. 2: Schematische Darstellung einer anderen Folienextrusionsmaschine
- Fig. 3: Schematische Darstellung des Ablaufs des erfindungsgemäßen Verfahrens

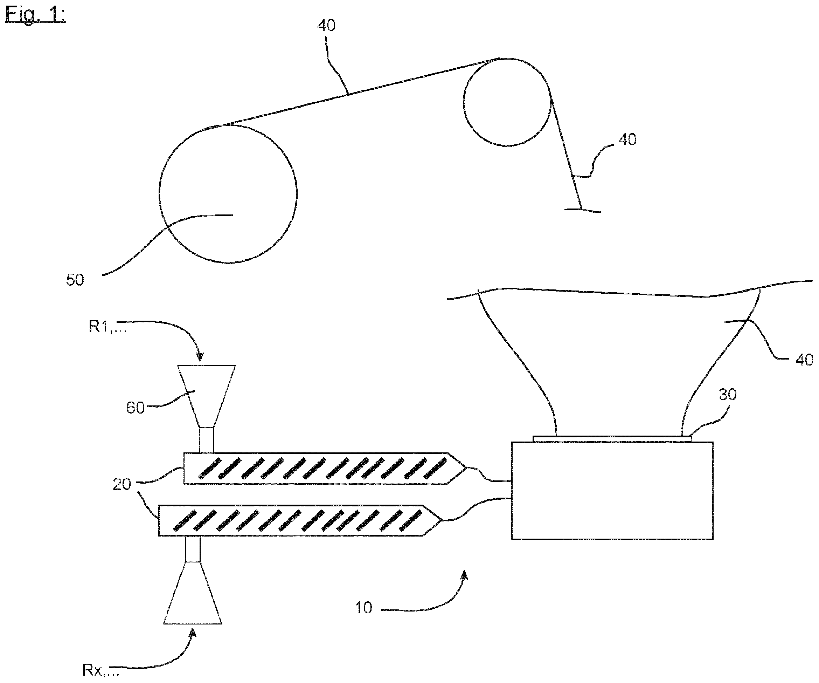

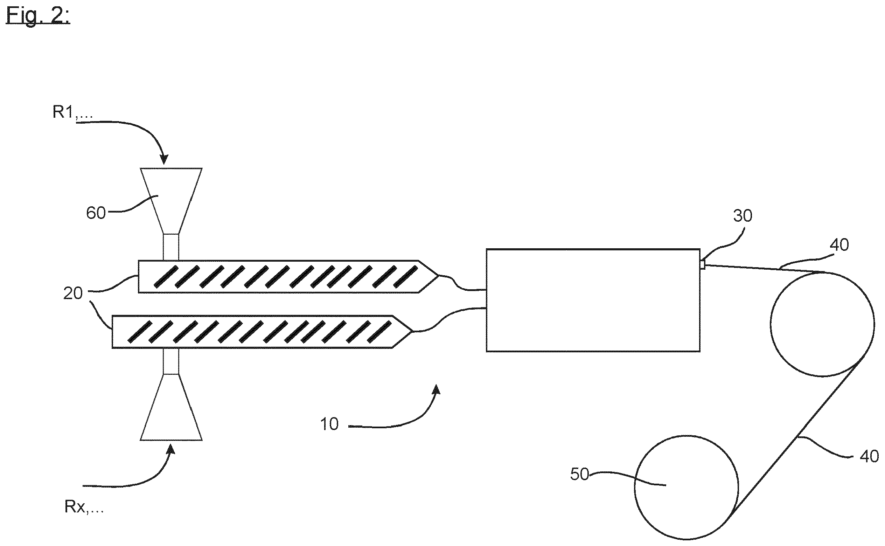

In den **Figuren 1** **und** **2** sind beispielhaft Folienextrusionsmaschinen 10 dargestellt. Gemeinsam ist diesen Folienxtrusionsmaschinen, dass sie mit Extrudern 20 ausgestattet sind. Jeder einzelne Extruder versorgt die Folienextrusionsmaschinen mit aufgeschmolzenem Kunststoffmaterial für eine Schicht der späteren Folie, welche eine Kunststofffolie ist. Einem ersten Extruder werden dazu über Dosiereinrichtungen 60 ein oder mehrere Rohstoffe R1,.... zugeführt, einem zweiten Extruder werden auf diese Weise ein oder mehrere Rohstoffe Rx,... zugeführt. Die Rohstoffe liegen in der Regel in Form von Kunststoffgranulat vor. Die Art und/oder die Menge der zugeführten Rohstoffe werden durch das erfindungsgemäße Verfahren vorbestimmt.

Das erfindungsgemäße Verfahren kann unter Verwendung einer Flachfolienoder einer Blasfolienextrusionsanlage gemäß der Figur 2 durchgeführt werden. Die **Figur 1** zeigt eine Blasfolienanlage mit den bereits beschriebenen Extrudern 20. Aus der Düse 30 wird eine Folienbahn oder kurz Folie 40 ausgegeben, wobei die Düse 30 als ringförmige Blasdüse ausgebildet ist. Die Folienbahn ist zunächst als Blase ausgebildet, die aber später flachgelegt wird. Diese Folie, die nun zwei aufeinander liegende Einzelfolien umfasst, wird über verschiedene Zwischenelemente auf eine Wickelrolle 50 oder nach erfolgtem Auseinanderschneiden auf zwei Wickelrollen nach links aufgewickelt.

In der **Figur 2** handelt es sich bei der Folienextrusionsmaschine um eine Flachfolienextrusionsmaschine, welche hier ebenfalls exemplarisch mit zwei Extrudern 20 für unterschiedliche Rezepturen ausgestattet ist. Aus der Düse 30 wird eine Folienbahn 40 ausgegeben, welche auf einer Kühlwalze abkühlt und anschließend auf einer Wickelrolle 50 aufgewickelt wird.

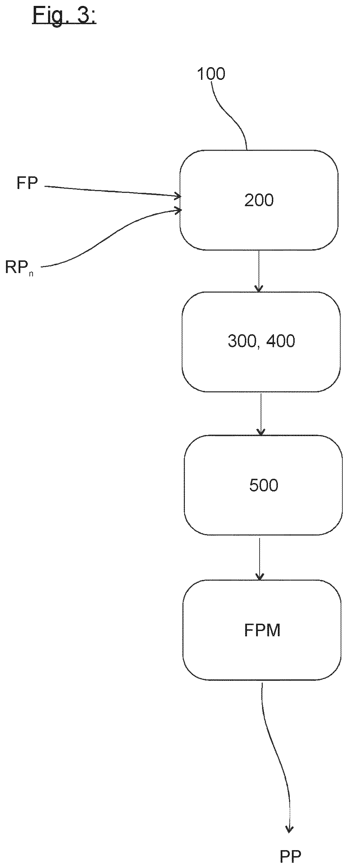

Die **Figur 3** zeigt schematisch den Ablauf des erfindungsgemäßen Verfahrens. Einer Speicher- und Recheneinheit 100 werden Folienparameter FP zu gewünschten Eigenschaften der Folie und Rohstoffparametern RPₙ zu Eigenschaften der Rohstoffe bereitgestellt. Der Index n der Rohstoffparameter RP zeigt an, dass es sich hier um eine Gesamtheit an Rohstoffen handelt, aus der ein oder mehrere Rohstoffe auswählbar sind. Innerhalb der Speicher- und Recheneinheit wird zunächst eine Gruppierung der Rohstoffparameter zu zumindest zwei Rohstoffparametergruppen durchgeführt, was mit dem Bezugszeichen 200 verdeutlicht wird. In zwei Folgeschritten, die in beliebiger Reihenfolge oder gleichzeitig durchgeführt werden können, erfolgt das Bilden von Korrelationen zwischen Rohstoffparametergruppen 300 und das Bilden von Korrelationen zwischen den Folienparametern und den Rohstoffparametergruppen 400 auf Basis eines Folienproduktionsmodells, welches innerhalb der Speicher- und Recheneinheit abgelegt ist und/oder durchgeführt wird. Im Folgeschritt 500 erfolgt das Erfassen einer Auswahl zumindest eines Rohstoffs aus zumindest einer Rohstoffparametergruppe.

Nachdem die Steuer- und Recheneinheit 100 zumindest einen Produktionsparameter PP der Folienextrusionsmaschine auf Basis des Folienproduktionsmodelles berechnet hat, erfolgt die Ausgabe des Produktionsparameters der Folienextrusionsmaschine.

| **Bezugszeichenliste** | |
|---|---|
| 10 | Folienextrusionsmaschine |
| 20 | Extruder |
| 30 | Düse |
| 40 | Folienbahn |
| 50 | Wickelrolle |
| 60 | Dosiereinrichtung |
| 100 | Speicher- und Recheneinrichtung |
| | |
| FPM | Folienproduktionsmodell |

## Patentansprüche

1. Verfahren zur Herstellung einer Kunststofffolie aus einer Gesamtmenge an Rohstoffen mit einer Folienextrusionsmaschine, umfassend die folgenden Schritte:
• Erfassen von Folienparametern zu gewünschten Eigenschaften der Kunststofffolie
• Erfassen von Rohstoffparametern zu Eigenschaften der Rohstoffe
• Gruppieren der Rohstoffparameter zu zumindest zwei Rohstoffparametergruppen
• Bilden von Korrelationen zwischen Rohstoffparametergruppen
• Bilden von Korrelationen zwischen den Folienparametern und den Rohstoffparametergruppen auf Basis eines Folienproduktionsmodells
• Erfassen einer Auswahl zumindest eines Rohstoffs aus zumindest einer Rohstoffparametergruppe
• Berechnen zumindest eines Produktionsparameters der Folienextrusionsmaschine auf Basis des Folienproduktionsmodelles
• Ausgabe des Produktionsparameters der Folienextrusionsmaschine.

2. Verfahren nach Anspruch 1, zusätzlich mit dem folgenden Schritt:
Erfassen eines Detaillierungsgrads für die Rohstoffparametergruppen.

3. Verfahren nach einem der vorstehenden Ansprüche, zusätzlich mit dem folgenden Schritt:
Ausgabe von Auswahlvorschlägen für eine Auswahl von Rohstoffen.

4. Verfahren nach einem der vorstehenden Ansprüche, zusätzlich mit dem folgenden Schritt:
Gewichten von Rohstoffparametergruppen.

5. Verfahren nach einem der vorstehenden Ansprüche, zusätzlich mit dem folgenden Schritt:
Erfassen von Produktionsparameterbereichen zumindest einer Folienproduktionsmaschine.

6. Computerprogrammprodukt, umfassend Befehle, die bei einer Ausführung des Programms auf einem Computer diesen dazu veranlassen die Schritte eines Verfahrens mit den Merkmalen eines der Ansprüche 1 bis 5 durchzuführen.

## Claims

1. Method for producing a plastic film from a total quantity of raw materials with a film extrusion machine, comprising the following steps:
- detecting film parameters relating to desired properties of the plastic film
- detecting raw material parameters relating to properties of the raw materials
- grouping the raw material parameters into at least two raw material parameter groups
- forming correlations between raw material parameter groups
- forming correlations between the film parameters and the raw material parameter groups based on a film production model
- detecting a selection of at least one raw material from at least one raw material parameter group
- calculating at least one production parameter of the film extrusion machine based on the film production model
- outputting the production parameter of the film extrusion machine.

2. Method according to claim 1, additionally with the following step:
detecting a level of detail for the raw material parameter groups.

3. Method according to any one of the preceding claims, additionally with the following step:
outputting selection suggestions for a selection of raw materials.

4. Method according to any one of the preceding claims, additionally with the following step:
weighting raw material parameter groups.

5. Method according to any one of the preceding claims, additionally with the following step:
detecting production parameter ranges of at least one film production machine.

6. Computer program product comprising instructions which, when the program is executed on a computer, cause the computer to perform the steps of a method with the features of any one of claims 1 to 5.

## Revendications

1. Procédé de fabrication d'un film plastique à partir d'une quantité totale de matières premières avec une machine d'extrusion de film, comprenant les étapes suivantes de :
- détection de paramètres de film pour des propriétés souhaitées du film plastique
- détection de paramètres de matières premières pour des propriétés des matières premières
- regroupement des paramètres des matières premières en au moins deux groupes de paramètres de matières premières
- formation de corrélations entre des groupes de paramètres de matières premières
- formation de corrélations entre les paramètres de film et les groupes de paramètres de matières premières sur la base d'un modèle de production de film
- détection d'une sélection d'au moins une matière première parmi au moins un groupe de paramètres de matières premières
- calcul d'au moins un paramètre de production de la machine d'extrusion de film sur la base du modèle de production de film
- sortie du paramètre de production de la machine d'extrusion de film.

2. Procédé selon la revendication 1, avec en outre l'étape suivante de :
détection d'un degré de détail pour les groupes de paramètres de matières premières.

3. Procédé selon l'une quelconque des revendications précédentes, avec en outre l'étape suivante de :
sortie de suggestions de sélection pour une sélection de matières premières.

4. Procédé selon l'une quelconque des revendications précédentes, avec en outre l'étape suivante de :
pondération de groupes de paramètres de matières premières.

5. Procédé selon l'une quelconque des revendications précédentes, avec en outre l'étape suivante de :
détection de plages de paramètres de production d'au moins une machine de production de film.

6. Produit de programme informatique comprenant des instructions qui, lors d'une exécution du programme sur un ordinateur, amènent celui-ci à mettre en œuvre les étapes d'un procédé avec les caractéristiques d'une des revendications 1 à 5.
